(19) Europäisches Patentamt
European Patent Office
Office européen des brevets

(11) Veröffentlichungsnummer : **0 049 684**
**B1**

(12) # EUROPÄISCHE PATENTSCHRIFT

(45) Veröffentlichungstag der Patentschrift : **07.08.85**

(51) Int. Cl.⁴ : **C 07 C161/00**, A 01 N 47/24

(21) Anmeldenummer : **81810391.3**

(22) Anmeldetag : **28.09.81**

(54) **N-(Benzamidosulfenyl)-N-methyl-carbamate, Zwischenprodukte, Herstellung und Verwendung in der Schädlingsbekämpfung.**

(30) Priorität : **02.10.80 CH 7362/80**
**02.06.81 CH 3597/81**

(43) Veröffentlichungstag der Anmeldung : **14.04.82 Patentblatt 82/15**

(45) Bekanntmachung des Hinweises auf die Patenterteilung : **07.08.85 Patentblatt 85/32**

(84) Benannte Vertragsstaaten : **BE CH DE FR GB IT LI NL**

(56) Entgegenhaltungen : **DE-A- 2 727 614**

(73) Patentinhaber : **CIBA-GEIGY AG**
**Postfach**
**CH-4002 Basel (CH)**

(72) Erfinder : **Drabek, Jozef, Dr.**
**Benkenstrasse 12**
**CH-4104 Oberwil (CH)**
Erfinder : **Böger, Manfred**
**Wilhelm Glock-Strasse 14**
**D-7858 Weil am Rhein 5 (DE)**

**EP 0 049 684 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft N-(Benzamidosulfenyl)-N-methyl-carbamate, Verfahren zu ihrer Herstellung und ihre Verwendung in der Schädlingsbekämpfung.

Aus der deutschen Offenlegungsschrift 27 27 614 sind N-Alkoxycarbonyl- und N-Cyclopropylcarbonyl-amino-sulfenyl-Carbamate mit pestizider Wirkung bekannt.

Die erfindungsgemässen N-(Benzamidosulfenyl)-N-methylcarbamate haben die Formel

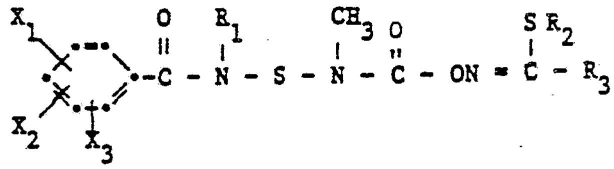

(I)

worin $R_1$ $C_1$-$C_{10}$-Alkyl, $R_2$ $C_1$-$C_3$-Alkyl oder Allyl, $R_3$ Methyl, $—CONH_2$ oder $—CON(CH_3)_2$ und $X_1$, $X_2$ und $X_3$ je Wasserstoff, Halogen, $C_1$-$C_4$-Alkyl oder Halogen-$C_1$-$C_4$-alkyl bedeuten.

Unter Halogen ist Fluor, Chlor, Brom oder Jod, insbesondere Chlor, zu verstehen.

Die bei $R_1$, $R_2$, $X_1$, $X_2$ und $X_3$ in Frage kommenden Alkylgruppen können geradkettig oder verzweigt sein.

Beispiele solcher Gruppen sind : Methyl, Trifluormethyl, Aethyl, Propyl, Isopropyl, n-, i-, sek.-, tert.-Butyl, n-Pentyl, n-Hexyl, n-Heptyl, n-Octyl, n-Nonyl und n-Decyl und deren Isomere.

Wegen ihrer Wirkung bevorzugt sind Verbindungen der Formel I, worin $R_1$ Methyl, $R_2$ $C_1$-$C_3$-Alkyl, $R_3$ Methyl oder $—CON(CH_3)_2$ und $X_1$, $X_2$ und $X_3$ je Wasserstoff, Chlor, Methyl oder Trifluormethyl, bedeuten.

Insbesondere bevorzugt sind aber Verbindungen der Formel I, worin $R_1$ Methyl, $R_2$ $C_1$-$C_3$-Alkyl, $R_3$ Methyl oder $—CON(CH_3)_2$, $X_1$ und $X_2$ je Wasserstoff, Chlor, Methyl oder Trifluormethyl und $X_3$ Wasserstoff bedeuten.

Die Verbindungen der Formel I können nach an sich bekannten Methoden z. B. wie folgt hergestellt werden :

1)

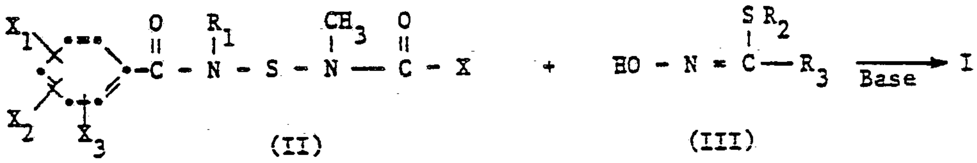


(II) (III)

2)

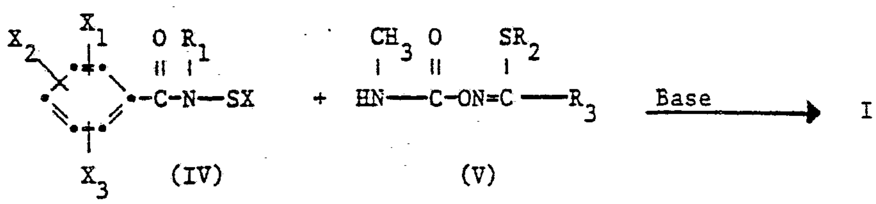


(IV) (V)

In den Formeln II bis V haben $R_1$, $R_2$, $R_3$, $X_1$, $X_2$ und $X_3$ die für die Formel I angegebene Bedeutung und X steht für ein Halogenatom, insbesondere für ein Fluor- oder Chloratom.

Die Verfahren werden bei einer Reaktionstemperatur zwischen − 50 °C und + 130 °C, vorzugsweise zwischen − 10 °C und + 100 °C, bei normalem oder leicht erhöhtem Druck und in Gegenwart eines gegenüber den Reaktionsteilnehmern inerten Lösungs- oder Verdünnungsmittels vorgenommen.

Als geeignete Basen für die Verfahren kommen insbesondere tertiäre Amine, wie Trialkylamine, Pyridine und Dialkylaniline ferner Hydroxide, Oxide, Carbonate und Bicarbonate von Alkali- und Erdalkalimetallen sowie Alkalimetallalkoholate wie z. B. Kalium-tert.butylat und Natriummethylat in Betracht.

Als Lösungs- oder Verdünnungsmittel eignen sich z. B. Aether und ätherartige Verbindungen wie Diäthyläther, Di-isopropyläther, Dioxan, Tetrahydrofuran ; aliphatische und aromatische Kohlenwasserstoffe, insbesondere Benzol, Toluol, Xylole ; und Ketone wie Aceton, Methyläthylketon und Cyclohexanon.

Die Ausgangsstoffe der Formel II sind neu und sind ebenfalls Gegenstand der Erfindung. Die Ausgangsstoffe der Formel III sind bekannt bzw. können analog bekannten Methoden hergestellt werden.

Die Verbindungen der Formel I eignen sich zur Bekämpfung von Schädlingen an Tieren und Pflanzen. Ferner haben diese Verbindungen fungizide und pflanzenregulatorische Eigenschaften.

Insbesondere eignen sich die Verbindungen der Formel I zur Bekämpfung von Insekten z. B. der

Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera und von phytopathogenen Milben und Zecken der Ordnung Akarina.

Vor allem eignen sich Verbindungen der Formel I zur Bekämpfung von pflanzenschädigenden Insekten, insbesondere pflanzenschädigenden Frassinsekten, in Zier- und Nutzpflanzen, insbesondere in Baumwollkulturen (z. B. gegen Spodoptera littoralis und Heliothis virescens) und Gemüsekulturen (z. B. gegen Leptinotarsa decemlineata und Myzus persicae).

In diesem Zusammenhang ist hervorzuheben, dass die genannten Verbindungen sich sowohl durch eine stark ausgeprägte systemische als auch Kontakt-Wirkung gegen saugende Insekten insbesondere gegen saugende Insekten der Ordnung Homoptera und vor allem gegen Insekten der Familie Aphididae (wie z. B. Aphis fabae, Aphis craccivora und Myzus persicae), welche sich mit bekannten Mitteln nur schwierig bekämpfen lassen, auszeichnen.

Wirkstoffe der Formel I zeigen auch eine sehr günstige Wirkung gegen Fliegen, wie z. B. Musca domestica und Mückenlarven. Daneben zeichnen sich die Verbindungen der Formel I durch eine breite ovizide und ovolarvizide Wirkung aus.

Darüber hinaus besitzen die Verbindungen der Formel I eine wertvolle Wirkung gegen pflanzenparasitäre Nematoden sowie gegen ektoparasitäre Milben und Zecken z. B. der Familien Ixodidae, Argasidae und Dermanyssidae.

Die Verbindungen der Formel I werden in unveränderter Form oder vorzugsweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen : Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyl-äther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxidiertes Kokosnussöl oder Sojaöl ; oder Wasser.

Als feste Trägerstoffe, z. B. für Stäubemittel und dispergierbare Pulver, werden, in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Talgöl gewonnen werden können. Ferner sind auch die Fettsäure-methyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl)-äthylammoniumbromid.

Die in der Formulierungstechnik gebräuchlichen Tenside sind u. a. in folgender Publikation beschrieben :

« Mc Cutcheon's Detergents and Emulsifiers Annual » MC Publishing Corp., Ridgewood, New Jersey, 1979.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel wie Dünger oder andere Wirkstoffe zur Erzielung spezieller Effekte enthalten.

Formulierungsbeispiele für flüssige Wirkstoffe der Formel I (% = Gewichtsprozent)

| 1. Emulsions-Konzentrate | a) | b) | c) |
|---|---|---|---|
| Wirkstoff | 20 % | 40 % | 50 % |
| Ca-Dodecylbenzolsulfonat | 5 % | 8 % | 5,8 % |
| Ricinusöl-polyäthylenglykoläther (36 Mol AeO) | 5 % | — | — |
| Tributylphenoyl-polyäthylenglykoläther (30 Mol AeO) | — | 12 % | 4,2 % |
| Cyclohexanon | — | 15 % | 20 % |
| Xylolgemisch | 70 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff | 80 % | 10 % | 5 % | 95 % |
| Aethylenglykol-monomethyl-äther | 20 % | — | — | — |
| Polyäthylenglykol MG 400 | — | 70 % | — | — |
| N-Methyl-2-pyrrolidon | — | 20 % | — | — |
| Epoxidiertes Kokosnussöl | — | — | 1 % | 5 % |
| Benzin (Siedegrenzen 160-190 °C) | — | — | 94 % | — |

Die Lösungen sind zur Anwendung in Form kleinster Tropfen geeignet.

| 3. Granulate | a) | b) |
|---|---|---|
| Wirkstoff | 5 % | 10 % |
| Kaolin | 94 % | — |
| Hochdisperse Kieselsäure | 1 % | — |
| Attapulgit | — | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff | 2 % | 5 % |
| Hochdisperse Kieselsäure | 1 % | 5 % |
| Talkum | 97 % | — |
| Kaolin | — | 90 % |

Durch inniges Vermischen der Trägerstoffe mit dem Wirkstoff erhält man gebrauchsfertige Stäubemittel.

Formulierungsbeispiele für feste Wirkstoffe der Formel I (% = Gewichtsprozent)

| 5. Spritzpulver | a) | b) |
|---|---|---|
| Wirkstoff | 20 % | 60 % |
| Na-Ligninsulfonat | 5 % | 5 % |
| Na-Laurylsulfat | 3 % | — |
| Na-Diisobutylnaphthalinsulfonat | — | 6 % |
| Octylphenolpolyäthylenglykoläther (7-8 Mol AeO) | — | 2 % |
| Hochdisperse Kieselsäure | 5 % | 27 % |
| Kaolin | 67 % | — |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff | 5 % | 8 % |
| Talkum | 95 % | — |
| Kaolin | — | 92 % |

Man erhält anwendungsfertige Stäubemittel, indem der Wirkstoff mit dem Träger vermischt und auf einer geeigneten Mühle vermahlen wird.

8. Extruder Granulat

| | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

9. Umhüllungs-Granulat

| | |
|---|---|
| Wirkstoff | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

10. Suspensions-Konzentrat

| | |
|---|---|
| Wirkstoff | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 %ige wässrige Formaldehyd-Lösung | 0,2 % |
| Silikonöl in Form einer 75 %igen wässrigen Emulsion | 0,8 % |
| Wasser | 32 % |

## Beispiel 1

a) Herstellung von N'-[N-(4-Methylbenzoyl)-N-methylamido]-sulfenyl-N'-methyl-carbamoylfluorid.

Bei − 50 °C werden in 200 ml Toluol (in Polyäthylenapparatur) 15,7 g HF eingeleitet. Bei − 50 °C werden dann 46,7 ml N-Methylisocyanat zugetropft. Nach zweistündigem Rühren bei − 30 bis − 50 °C wird mit 100 ml Toluol verdünnt, bei − 10 °C 145 g 4-Methylbenzoylamidomethylsulfenylchlorid und anschliessend während 30 Minuten 108,5 ml Triäthylamin zugetropft. Das Reaktionsgemisch wird bei 20 °C 18 Stunden und bei 50 °C sechs Stunden gerührt. Nach dem Abkühlen wird abgenutscht und das Filtrat eingeengt. Nach dem Umkristallisieren des Rohproduktes aus Methylenchlorid/Hexan (1 : 1) erhählt man die Verbindung der Formel

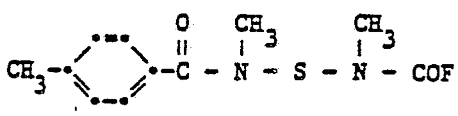

mit einem Schmelzpunkt von 66-67 °C.

Auf analoge Weise werden auch folgende Verbindungen hergestellt :

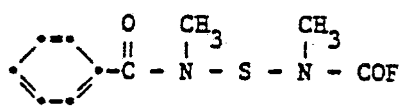

Sdp.: 112-115°C

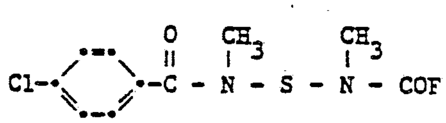

Smp.: 88-89°C

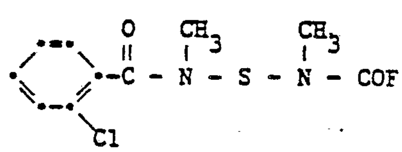

Smp.: 53-55°C

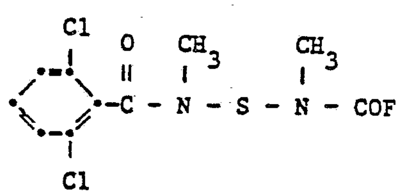

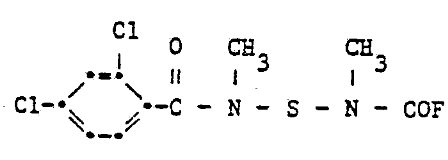

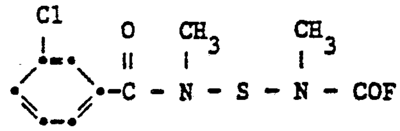

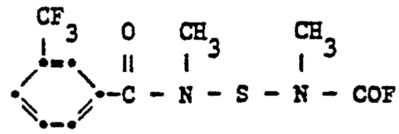

b) Herstellung von N'-[N-4-Methylbenzoyl)-N-methylamido)-sulfenyl]-[(N'-methylcarbamoyl)-oxy]-thioacetimidat.

6,3 g 1-Methylmercapto-acetaloxim und 15,4 g N'-[N-(4-Methylbenzoyl)-N-methylamido-sulfenyl-N'-methylcarbamoylfluorid werden in 50 ml Methylenchlorid gelöst. Unter Rühren werden zu dieser Lösung 11,05 g Triäthylamin zugetropft. Das Reaktionsgemisch wird sechszehn Stunden bei 20 °C und zwei Stunden bei 45 °C gerührt. Das Lösungsmittel wird abdestilliert und das Rohprodukt aus einem Gemisch von Methylenchlorid und Hexan (1 : 1) umkristallisiert.

Man erhält die Verbindung der Formel

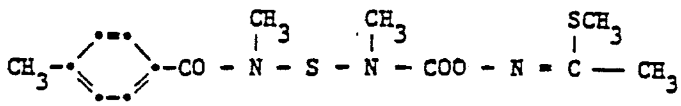

mit einem Schmelzpunkt von 118-121 °C.

Auf analoge Weise werden auch folgende Verbindungen hergestellt :

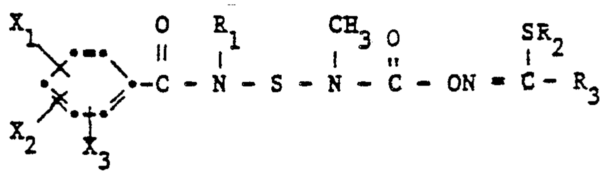

| $X_1$ | $X_2$ | $X_3$ | $R_1$ | $R_2$ | $R_3$ | Physikalische Daten |
|---|---|---|---|---|---|---|
| H | H | H | $CH_3$ | $CH_3$ | $CH_3$ | Smp. : 98-102 °C |
| H | H | H | $CH_3$ | $C_2H_5$ | $CH_3$ | $n_D^{20°} = 1{,}5525$ |
| H | H | H | $CH_3$ | $C_3H_{7(i)}$ | $CH_3$ | Smp. : 74-77 °C |
| H | H | H | $CH_3$ | $C_3H_{7(n)}$ | $CH_3$ | Smp. : 86-90 °C |
| H | H | H | $CH_3$ | $CH_3$ | $-CON(CH_3)_2$ | Smp. : 145-147 °C |
| 4-Cl | H | H | $CH_3$ | $CH_3$ | $CH_3$ | Smp. : 117-120 °C |
| 2-Cl | H | H | $CH_3$ | $CH_3$ | $CH_3$ | Smp. : 136-137 °C |
| 4-Cl | H | H | $CH_3$ | $C_2H_5$ | $CH_3$ | Smp. : 56-58 °C |
| 2-Cl | H | H | $CH_3$ | $C_2H_5$ | $CH_3$ | Smp. : 112-114 °C |
| 4-$CH_3$ | H | H | $CH_3$ | $C_2H_5$ | $CH_3$ | Smp. : 83-85 °C |
| 4-Cl | H | H | $CH_3$ | $CH_3$ | $-CON(CH_3)_2$ | Smp. : 137-139 °C |
| 2-Cl | H | H | $CH_3$ | $CH_3$ | $-CON(CH_3)_2$ | Smp. : 138-139 °C |
| 4-$CH_3$ | H | H | $CH_3$ | $CH_3$ | $-CON(CH_3)_2$ | Smp. : 106-108 °C |
| 3-Cl | H | H | $CH_3$ | $CH_3$ | $CH_3$ | Harz |
| 3-$CF_3$ | H | H | $CH_3$ | $CH_3$ | $CH_3$ | Harz |
| 2-Cl | 4-Cl | H | $CH_3$ | $CH_3$ | $CH_3$ | Smp. : 135 °C |
| 2-Cl | 6-Cl | H | $CH_3$ | $CH_3$ | $CH_3$ | Harz |
| 4-$CH_3$ | H | H | $C_3H_{7(i)}$ | $CH_3$ | $CH_3$ | Smp. : 101-103 °C |
| H | H | H | $C_4H_{9(n)}$ | $CH_3$ | $CH_3$ | Harz |
| H | H | H | $C_6H_{13(n)}$ | $CH_3$ | $CH_3$ | Harz |
| 3-$CF_3$ | H | H | $CH_3$ | $CH_3$ | $-CON(CH_3)_2$ | Harz |

Beispiel 2

Insektizide Frassgift-Wirkung : Spodoptera littoralis und Heliothis virescens

Baumwollpflanzen wurden mit einer Versuchslösung, enthaltend 50, 100, 200 und 400 ppm der zu prüfenden Verbindung, besprüht.

Nach dem Antrocknen des Belages wurden die Pflanzen je mit Larven der Spezies Spodoptera littoralis ($L_3$-Stadium), oder Heliothis virescens ($L_3$) besetzt. Man verwendete pro Versuchsverbindung und pro Test-Spezies zwei Pflanzen, und eine Auswertung der erzielten Abtötungsrate erfolgte nach 2, 4, 24 und 48 Stunden. Der Versuch wurde bei 24 °C und 60 % relativer Luftfeuchtigkeit durchgeführt.

Innerhalb der oben angebenen Konzentrationsgrenzen zeigten Verbindungen gemäss dem Herstellungsbeispiel 1 100 %ige Wirkung gegen Larven der Spezies Spodoptera littoralis und Heliothis virescens.

Beispiel 3

Insektizide Kontakt-Wirkung : Myzus persicae

In Wasser angezogene Pflanzen (Vicia faba) wurden vor dem Versuchsbeginn je mit ca. 200 Individuen der Spezies Myzus persicae besiedelt. Die so behandelten Pflanzen wurden 3 Tage später mit einer Lösung enthaltend 10 oder 1 ppm der zu prüfenden Verbindung aus 30 cm Distanz bis zur Tropfnässe besprüht. Man verwendete pro Test-Verbindung und pro Konzentration zwei Pflanzen, und eine Auswertung der erzielten Abtötungsrate erfolgte nach weiteren 24 Stunden.

Innerhalb der oben angegebenen Konzentrationsgrenzen zeigten Verbindungen gemäss Beispiel 1 eine 100 %ige Wirkung gegen Insekten der Spezies Myzus persicae.

Beispiel 4

Insektizide systemische Wirkung : Aphis craccivora

Bewurzelte Bohnenpflanzen wurden in Töpfe, welche 600 ccm Erde enthalten, verpflanzt. Anschliessend wurden 50 ml einer Versuchslösung enthaltend 25 ppm, 5 ppm bzw. 1 ppm der zu prüfenden Verbindung direkt auf die Erde gegossen.

Nach 24 Stunden wurden auf die oberirdischen Pflanzenteile Blattläuse (Aphis craccivora) gesetzt und die Pflanzen mit einem unten zugeschnürten Plastikzylinder überstülpt, um die Läuse vor einer eventuellen Kontakt- oder Gaswirkung der Testsubstanz zu schützen.

Die Auswertung der erzielten Abtötung erfolgte 24 und 48 Stunden nach Versuchsbeginn. Pro Konzentrationsdosis Testsubstanz wurden zwei Pflanzen, je eine in einem separaten Topf, verwendet. Der Versuch wurde bei 25 °C und 70 % relativer Luftfeuchtigkeit durchgeführt.

Innerhalb der oben angegebenen Konzentrationsgrenzen zeigten Verbindungen gemäss Beispiel 1 eine 100 %ige systemische Wirkung gegen Insekten der Spezies Aphis craccivora.

**Patentansprüche**

1. Ein N-(Benzamidosulfenyl)-N-methylcarbamat der Formel

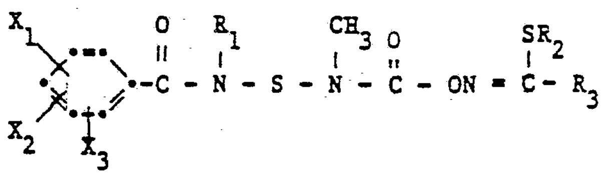

worin $R_1$ $C_1$-$C_{10}$-Alkyl, $R_2$ $C_1$-$C_3$-Alkyl oder Allyl, $R_3$ Methyl, $—CONH_2$ oder $—CON(CH_3)_2$ und $X_1$, $X_2$ und $X_3$ je Wasserstoff, Halogen oder $C_1$-$C_4$-Alkyl oder Halogen-$C_1$-$C_4$-alkyl bedeuten.

2. Eine Verbindung gemäss Anspruch 1, worin $R_1$ Methyl, $R_2$ $C_1$-$C_3$-Alkyl, $R_3$ Methyl oder $—CON(CH_3)_2$ und $X_1$, $X_2$ und $X_3$ je Wasserstoff, Chlor, Methyl oder Trifluormethyl bedeuten.

3. Eine Verbindung gemäss Anspruch 1, worin $R_1$ Methyl, $R_2$ $C_1$-$C_3$-Alkyl, $R_3$ Methyl oder $—CON(CH_3)_2$, $X_1$ und $X_2$ je Wasserstoff, Chlor, Methyl oder Trifluormethyl und $X_3$ Wasserstoff bedeuten.

4. Die Verbindung gemäss Anspruch 3 der Formel

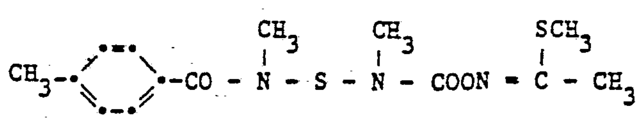

5. Die Verbindung gemäss Anspruch 3 der Formel

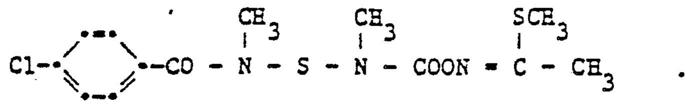

6. Die Verbindung gemäss Anspruch 3 der Formel

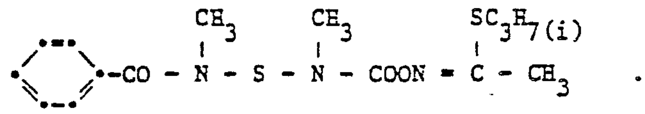

7. Die Verbindung gemäss Anspruch 3 der Formel

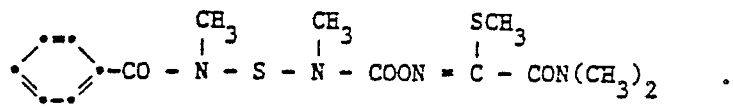

8. Die Verbindung gemäss Anspruch 3 der Formel

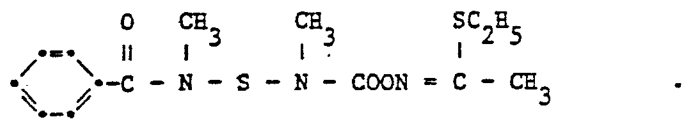

9. Die Verbindung gemäss Anspruch 3 der Formel

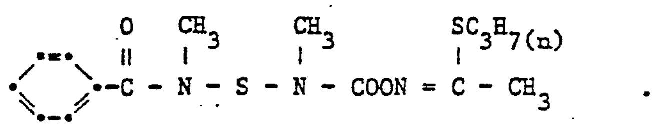

10. Die Verbindung gemäss Anspruch 3 der Formel

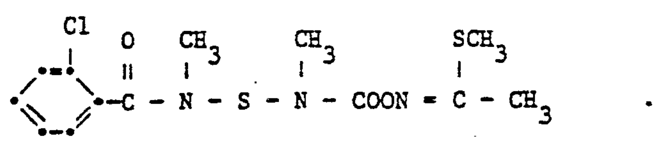

11. Die Verbindung gemäss Anspruch 3 der Formel

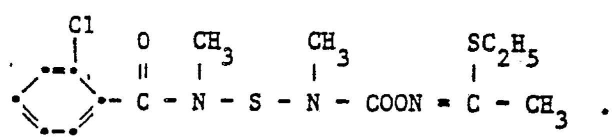

12. Die Verbindung gemäss Anspruch 3 der Formel

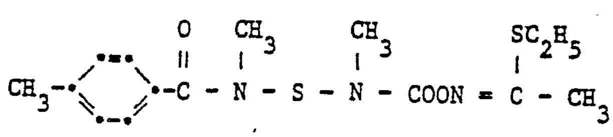

13. Die Verbindung gemäss Anspruch 3 der Formel

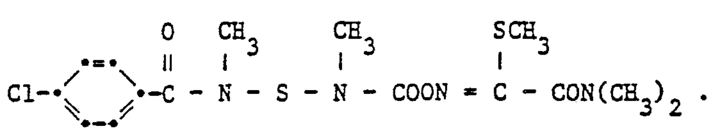

14. Die Verbindung gemäss Anspruch 3 der Formel

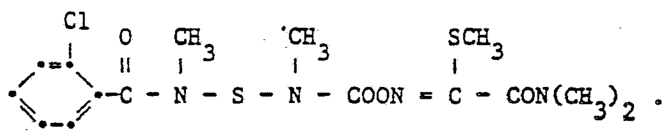

15. Die Verbindung gemäss Anspruch 3 der Formel

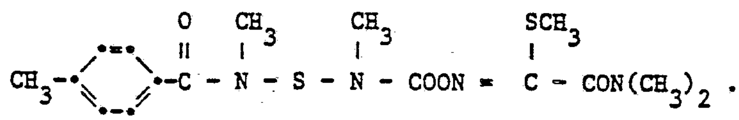

16. Die Verbindung gemäss Anspruch 3 der Formel

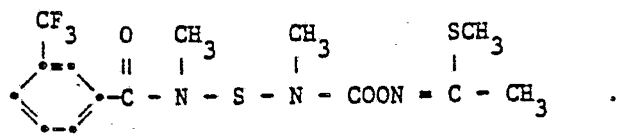

17. Die Verbindung gemäss Anspruch 3 der Formel

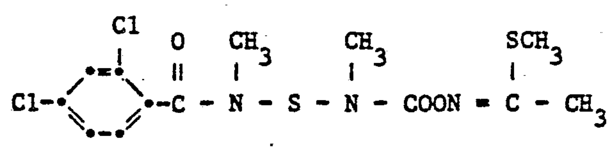

18. Die Verbindung gemäss Anspruch 1 der Formel

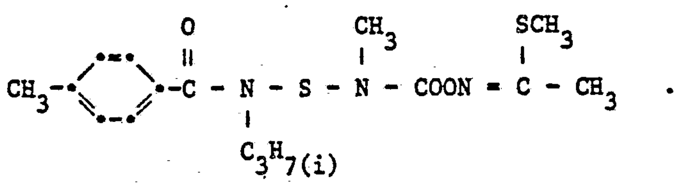

19. Ein Verfahren zur Herstellung von Verbindungen gemäss Anspruch 1, dadurch gekennzeichnet, dass man in Gegenwart einer Base eine Verbindung der Formel

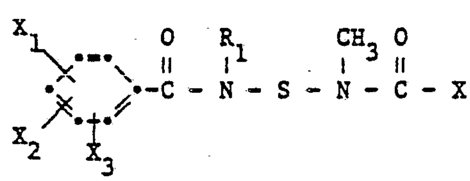

mit einer Verbindung der Formel

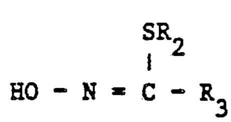

reagieren lässt, worin $R_1$, $R_2$, $R_3$, $X_1$, $X_2$ und $X_3$ die in Anspruch 1 angegebene Bedeutung haben und X für ein Halogenatom steht.

20. Ein Schädlingsbekämpfungsmittel, welches als aktive Komponente eine Verbindung gemäss Anspruch 1 enthält.

21. Die Verwendung einer Verbindung gemäss Anspruch 1 zur Bekämpfung von Schädlingen an Tieren und Pflanzen.

22. Eine Verbindung der Formel

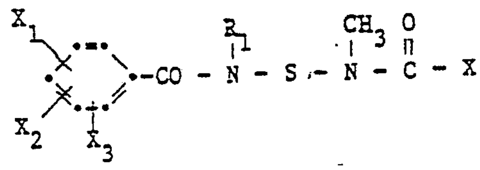

worin $R_1$ $C_1$-$C_{10}$-Alkyl, X Halogen und $X_1$, $X_2$ und $X_3$ je Wasserstoff, Halogen, $C_1$-$C_4$-Alkyl oder Halogen-$C_1$-$C_4$-alkyl bedeuten.

**Claims**

1. A N-(benzamidosulfenyl)-N-methylcarbamate of the formula

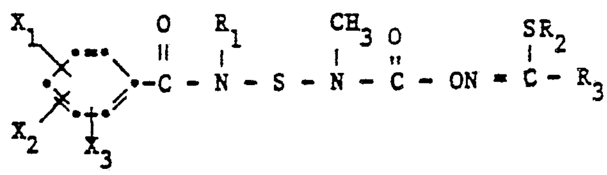

wherein $R_1$ is $C_1$-$C_{10}$ alkyl, $R_2$ is $C_1$-$C_3$ alkyl or allyl, $R_3$ is methyl, —$CONH_2$ or —$CON(CH_3)_2$, and each of $X_1$, $X_2$ and $X_3$ is hydrogen, halogen, $C_1$-$C_4$ alkyl or $C_1$-$C_4$ haloalkyl.

2. A compound according to claim 1, wherein $R_1$ is methyl, $R_2$ is $C_1$-$C_3$ alkyl, $R_3$ is methyl or —$CON(CH_3)_2$, and each of $X_1$, $X_2$ and $X_3$ is hydrogen, chlorine, methyl or trifluoromethyl.

3. A compound according to claim 1, wherein $R_1$ is methyl, $R_2$ is $C_1$-$C_3$ alkyl, $R_3$ is methyl or —$CON(CH_3)_2$, each of $X_1$ and $X_2$ is hydrogen, chlorine, methyl or trifluoromethyl, and $X_3$ is hydrogen.

4. The compound according to claim 3 of the formula

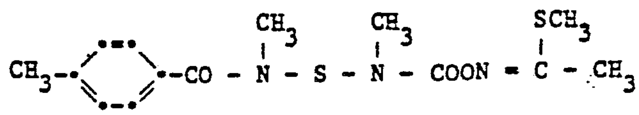 .

5. The compound according to claim 3 of the formula

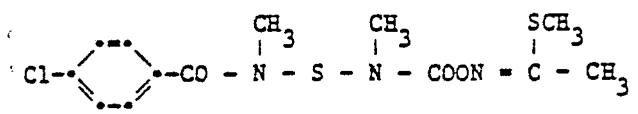 .

6. The compound according to claim 3 of the formula

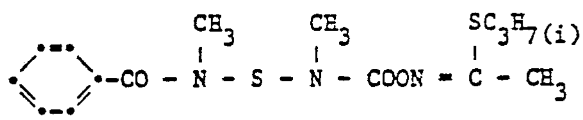 .

7. The compound according to claim 3 of the formula

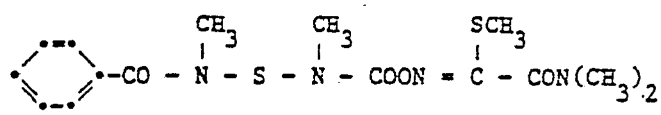 .

8. The compound according to claim 3 of the formula

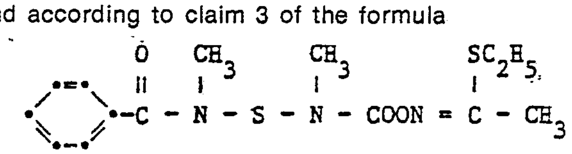 .

9. The compound according to claim 3 of the formula

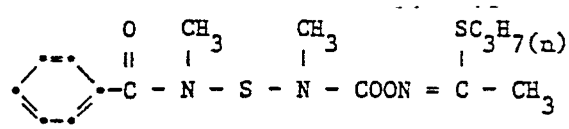 .

10. The compound according to claim 3 of the formula

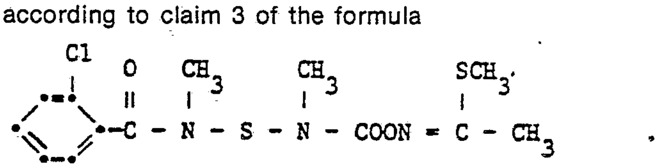

11. The compound according to claim 3 of the formula

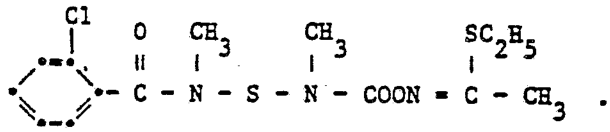

12. The compound according to claim 3 of the formula

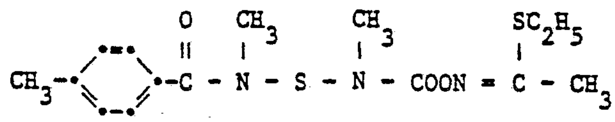

13. The compound according to claim 3 of the formula

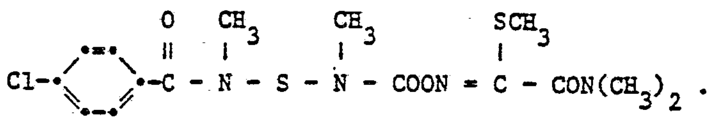

14. The compound according to claim 3 of the formula

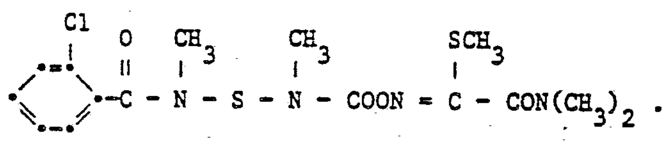

15. The compound according to claim 3 of the formula

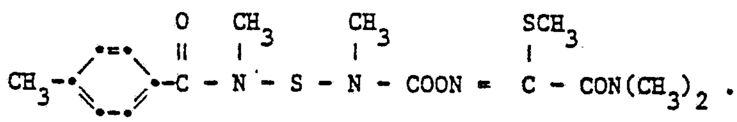

16. The compound according to claim 3 of the formula

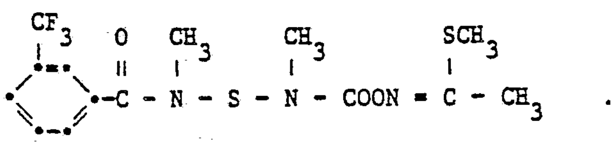

17. The compound according to claim 3 of the formula

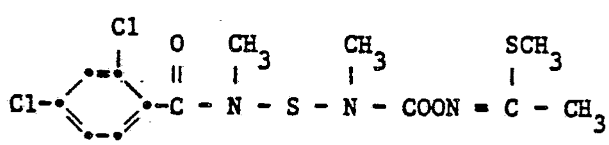

18. The compound according to claim 3 of the formula

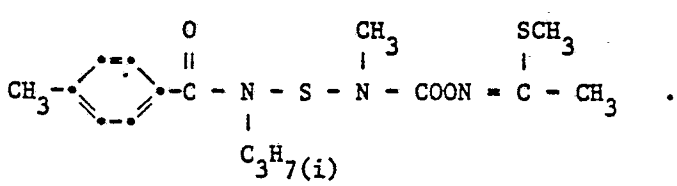

19. A process for the production of a compound according to claim 1, which process comprises reacting a compound of the formula

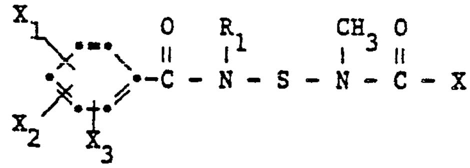

in the presence of a base, with a compound of the formula

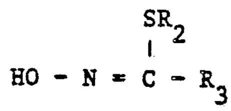

in which formulae $R_1$, $R_2$, $R_3$, $X_1$, $X_2$ and $X_3$ are as defined in claim 1 and X is a halogen atom.

20. A pesticidal composition which contains, as active component, a compound according to claim 1.

21. A method of controlling pests of animals and plants at a locus, which comprises applying to said locus a pesticidally effective amount of a compound according to claim 1.

22. A compound of the formula

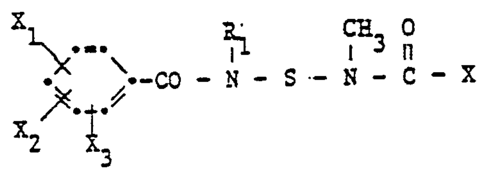

wherein $R_1$ is $C_1$-$C_{10}$ alkyl, X is halogen, and each of $X_1$, $X_2$ and $X_3$ is hydrogen, halogen, $C_1$-$C_4$ alkyl or $C_1$-$C_4$ haloalkyl.

**Revendications**

1. Un N-(benzamidosulfényl)-N-méthylcarbamate de formule

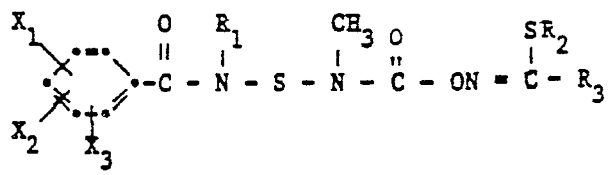

dans laquelle $R_1$ représente un groupe alkyle en $C_1$-$C_{10}$, $R_2$ représente un groupe alkyle en $C_1$-$C_3$ ou allyle, $R_3$ représente un groupe méthyle, $—CONH_2$ ou $—CON(CH_3)_2$, et $X_1$, $X_2$ et $X_3$ représentent chacun l'hydrogène, un halogène ou un groupe alkyle en $C_1$-$C_4$ ou halogénoalkyle en $C_1$-$C_4$.

2. Un composé selon la revendication 1, dans lequel $R_1$ représente un groupe méthyle, $R_2$ un groupe alkyle en $C_1$-$C_3$, $R_3$ un groupe méthyle ou $—CON(CH_3)_2$ et $X_1$, $X_2$ et $X_3$ représentent chacun l'hydrogène, le chlore, un groupe méthyle ou trifluorométhyle.

3. Un composé selon la revendication 1, dans lequel $R_1$ représente un groupe méthyle, $R_2$ un groupe alkyle en $C_1$-$C_3$, $R_3$ un groupe méthyle ou $—CON(CH_3)_2$, $X_1$ et $X_2$ représentent chacun l'hydrogène, le chlore, un groupe méthyle ou trifluorométhyle, et $X_3$ représente l'hydrogène.

4. Le composé selon la revendication 3, de formule

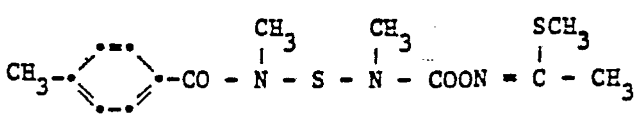 .

5. Le composé selon la revendication 3, de formule

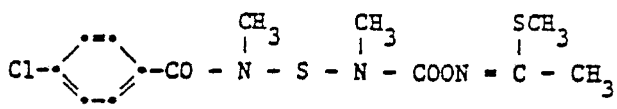 .

6. Le composé selon la revendication 3, de formule

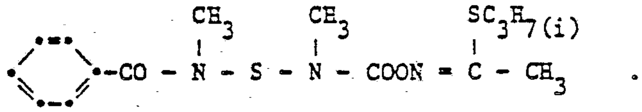

7. Le composé selon la revendication 3, de formule

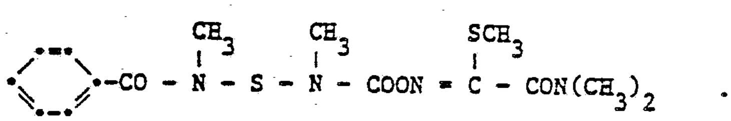

8. Le composé selon la revendication 3, de formule

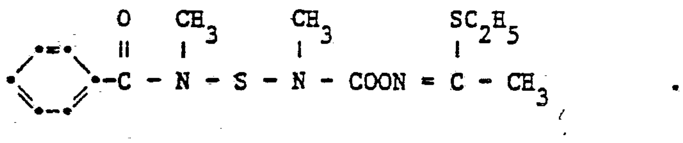

9. Le composé selon la revendication 3, de formule

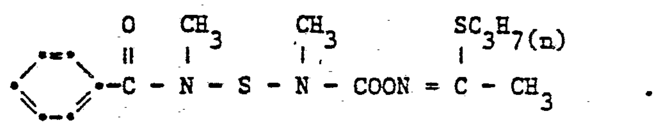

10. Le composé selon la revendication 3, de formule

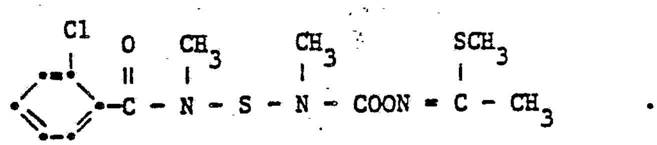

11. Le composé selon la revendication 3, de formule

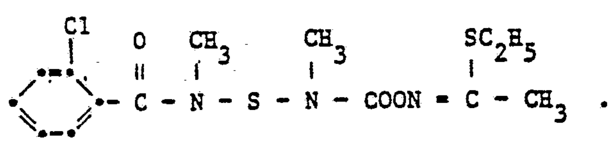

12. Le composé selon la revendication 3, de formule

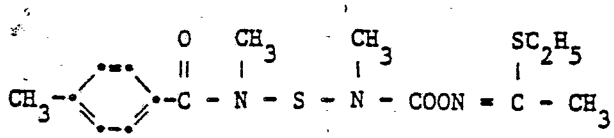

13. Le composé selon la revendication 3, de formule

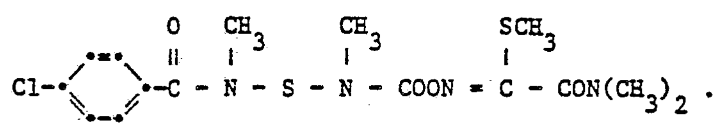

14. Le composé selon la revendication 3, de formule

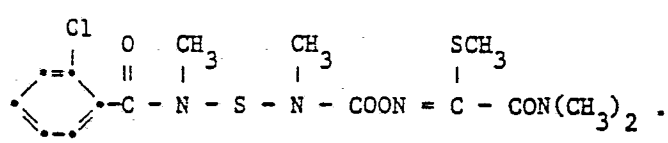

15. Le composé selon la revendication 3, de formule

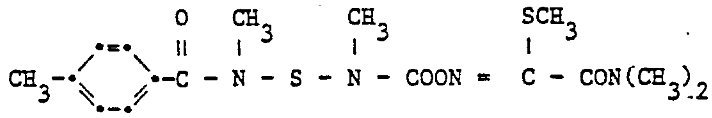

16. Le composé selon la revendication 3, de formule

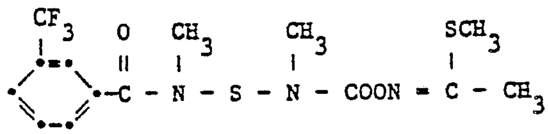

17. Le composé selon la revendication 3, de formule

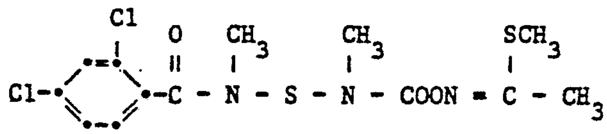

18. Le composé selon la revendication 1, de formule

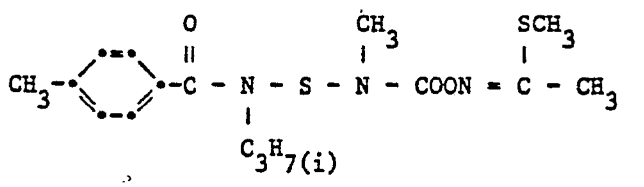

19. Un procédé de préparation des composés selon la revendication 1, caractérisé en ce que l'on fait réagir en présence d'une base un composé de formule

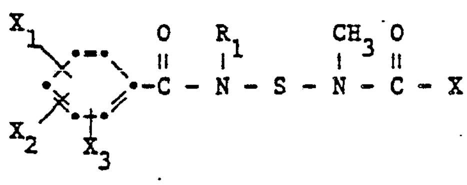

avec un composé de formule

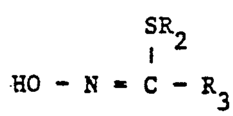

$R_1$, $R_2$, $R_3$, $X_1$, $X_2$ et $X_3$ ayant les significations indiquées dans la revendication 1 et X représentant un atome d'halogène.

20. Un produit pesticide contenant en tant que composant actif un composé selon la revendication 1.

21. L'utilisation d'un composé selon la revendication 1 dans la lutte contre les parasites des animaux et des végétaux.

22. Un composé de formule

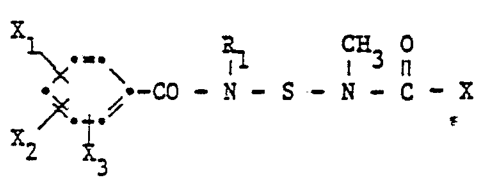

dans laquelle $R_1$ représente un groupe alkyle en $C_1$-$C_{10}$, X représente un halogène et $X_1$, $X_2$ et $X_3$ représentent chacun l'hydrogène, un halogène, un groupe alkyle en $C_1$-$C_4$ ou halogénoalkyle en $C_1$-$C_4$.